# EUROPEAN PATENT APPLICATION

(11) **EP 2 482 618 A2**
(43) Date of publication of application: **01.08.2012**
(21) Application number: 12152883.0
(22) Date of filing: 27.01.2012
(51) Int. Cl.: H05B 33/08

(54) **LED tubular lamp and lighting fixture arrangement**

(30) Priority: 31.01.2011 FI 20115098
(71) Applicant: Teknoware Oy, 15200 Lahti (FI)
(72) Inventor: Hartikka, Yrjö, 16320 Pennala (FI)
(74) Representative: Äkräs, Tapio Juhani

(57) **Abstract**

A LED tubular lamp comprising a translucent tube (30) of the shape and size of a fluorescence tube with a contact pin pair (37, 38, 39, 40) at both ends thereof for connecting a LED tube mechanically and electrically to the tube holders of the fluorescent tube lighting fixture. LED components (32) and a current control unit (33, 34) are installed inside the LED tube. The LED tubular lamp also comprises a voltage level sensor circuit (42, 43) that is arranged to detect automatically a voltage difference in the contact pin pair at least at one end of the tube and to determine from the voltage difference brightness and/or colour control information for the current control unit (33, 34) of the LED components.

## Description

### Background of the invention

The invention relates to lamps and, in particular, to LED tubular lamps which have one or more LEDs as light sources and which can replace a fluorescent tube.

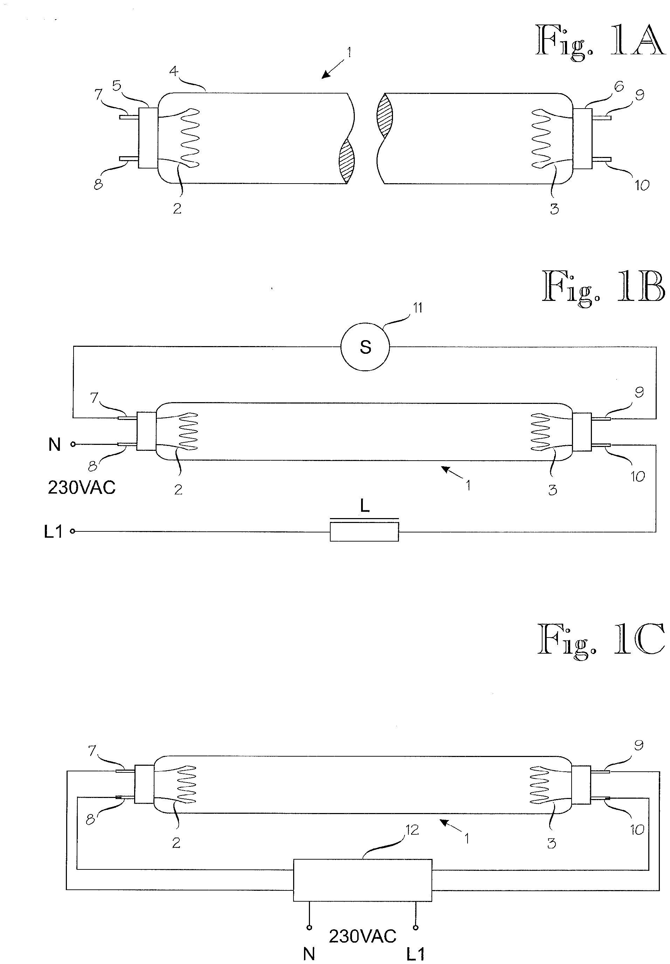

Fluorescent lamps are widely used in different environments, such as in homes, offices and industry. Fluorescent lamps are more durable, economical and efficient than incandescent lamps, in which most of the electric power generates heat rather than light. In a conventional fluorescent lamp, the body is a straight tube with a length of 15 to 60 times the diameter of the tube. The tube may also be bent, in which case it may be of almost any shape. Fluorescent tubes are low-pressure mercury discharge lamps in which the inner surface of the tube is coated with a fluorescent material. The structure of a fluorescent tube is very simple and is illustrated in Figure 1A. The lamp consists of an air-tight glass tube 4 containing a small amount of mercury, an inert gas, a fluorescent coating (luminophor), such as phosphor, and electrodes 2 and 3. At each end of the fluorescent tube, there is a lid 5 or 6 with two symmetrically positioned contact pins 7 and 8 or 9 and 10, to which the electrode 2 or 3 is connected. The power supply to the fluorescent tube is provided via these contact pins 7 and 8; 9 and 10. When the lamp is in operation, the temperature of the electrodes 2 and 3 must be sufficiently high in order to enable electrons to be released from them. A fluorescent lamp does not go on at a normal operating voltage without preheating. It is typical of fluorescent tubes (EN 60081) that their cathodes are heated with separate preheat circuits or arrangements. On the other hand, after the lamp has gone on, the discharging current through the tube must be restricted, so that the tube will not be damaged. Therefore, all fluorescent tubes require a ballast. Conventionally, the ballast has been a ballast-starter combination, which is illustrated in Figure 1 B. When a mains voltage (e.g. 230 VAC) is connected to the lighting fixture, the resistance through the tube is very high, and the electric current passes through a ballast L, the electrode 3, a closed starter 11 and the electrode 2. When passing through the electrodes 2 and 3, the electric current heats the electrodes, causing them to emit electrons which ionize the gas inside the tube. The ionized gas forms a current path through the tube. The current passing through the ballast L generates a magnetic field in the ballast. When, after a moment, the starter 11 opens, the magnetic field of the ballast L generates a high voltage between the electrodes 2 and 3, which switches the lamp on.

Nowadays, electronic ballasts are also used. The electronic ballast also attends to switching the lamp on, so there is no need for a separate starter. A preheating arrangement is implemented by either separate preheating windings or a starter capacitor. This is illustrated in Figure 1C. An electronic ballast 12 connected to the mains voltage (e.g. 230 VAC) provides continuous electric current through each of the electrodes 2 and 3. These electric currents are configured in such a way that a voltage difference is generated between the electrodes 2 and 3. When the mains voltage is connected to the ballast 12, the electric current passing through the electrodes heats them quickly, and the emitted electrons ionize the gas in the tube. The gas having ionized, the voltage difference between the electrodes starts a gas discharge. In fluorescent light use, dimming adjustment can also be done through an electronic ballast 12. The ballast may be constructed to reduce the current to the fluorescent tube, whereby the amount of light produced by the fluorescent tube is also reduced. At the same time, it is typically necessary to increase the heater circuit voltages of the fluorescent tube electrodes 2 and 3 to ensure that the temperature of the electrodes does not decrease and cause detachment of the active agent from the cathode. In some special uses, only light adjustment in a few steps is required. In fluorescent tube dimming solutions, the electronic ballast can be controlled by a linear or stepped voltage message through a separate control circuit. The generally used control methods are defined in the European ballast standard EN 60929. In Finland, analogue 1 to 10 V voltage control is generally used as well as the DALI (Digital Addressable Lighting Interface) protocol control signal that has already established itself in the field. Yet another example of a control bus standard is LON (Local Operating Network). Regardless of the control method, in practice control refers to providing a control message to the electronic ballast of a fluorescent tube lighting fixture to produce the required operation, and the adjustment of the level of light is done in the ballast.

A common aim is to replace fluorescent tubes with LED tubular lamps having the same length and values. In these, the physical dimensions are the same as in straight fluorescent tubes (e.g. T8 with a diameter of 26 mm and a length of 60 or 120 cm), whereby the fluorescent tube could be directly replaced with a LED tube in an existing fluorescent tube lighting fixture. Examples of such LED tubular lamps are described in publications EP1852648, US2007/0183156, US2010/0002439 and WO2009/131340. The aim is to achieve a long lifetime for the light source as well as improved luminous efficiency (amount of light/electric energy). In practice, the intention is just to replace a fluorescent tube with a LED tube without altering the structures of the lighting fixture. Some of the LED tubes work directly with a fluorescent tube ballast, in which case only the starter is to be removed from service. Then, the LED tube can be replaced easily and without assistance from an expert.

Thus, a LED tube can be constructed such that it can replace a fluorescent tube of the same length. It is also desirable that the LED tube can be controlled with the same dimming message (e.g. DALI or LON) as the fluorescent tube lighting fixtures. In practice, bringing the control information to the LED tube is problematic, because, as in a fluorescent tube, it too has two fastening-connecting pins. Operating voltage is brought through them to a fluorescent tube and LED tube. Because the structure of a LED tube and the operation of the connecting pins must correspond to those of a fluorescent tube, it is difficult to bring the control message to the LED tube. Therefore, the dimming of a LED tube is done by reducing its supply current in a separate electronic current supply unit external to the LED tube.

### Brief description of the invention

It is thus an object of the invention to develop a LED tubular lamp, the brightness or colour of light of which is adjustable without a separate current supply unit and which can be used to replace a fluorescent tube. The object of the invention is achieved by a tubular lamp and arrangement defined in the independent claims. The preferred embodiments of the invention are disclosed in the dependent claims.

An aspect of the invention is a LED tubular lamp that comprises a translucent or fluorescent tube of substantially the shape and size of a fluorescence tube, inside which one or more LED components and a current control unit are installed, and at each end of which there is a contact pin pair for connecting the LED tubular lamp mechanically and electrically to the tube holders of the fluorescent tube lighting fixture. The LED tubular lamp comprises a voltage level sensor circuit that is arranged to detect automatically a voltage difference in the contact pin pair of at least one end and to define from it brightness and/or colour control information for the current control unit of the LED components.

According to an embodiment, the voltage level sensor circuit is arranged to detect automatically the voltage difference in the contact pin pairs at both ends of the tube and to define control information for the current control unit on the basis of the higher value.

According to an embodiment, the voltage level sensor circuit is arranged to detect automatically the voltage difference in the contact pin pairs at both ends of the tube and to define control information for the current control unit on the basis thereof.

According to an embodiment, both ends of the tube have their own voltage level sensor circuit.

According to an embodiment, both ends of the tube have their own voltage level sensor circuit and the output of both voltage level sensor circuits is connected through a corresponding isolating diode to a common control input in the voltage control unit.

According to an embodiment, the supply voltage and control voltage are received at different contact pins of the contact pin pair of the same tube end, whereby the voltage level sensor circuit generates from the supply voltage a reference voltage, with which the control voltage is compared.

According to an embodiment, the current control unit is responsive to said control information for adjusting the current supplied to the LED components.

According to an embodiment, the current control unit is arranged to pulse width modulate the current supplied to the LED components according to the control information.

According to an embodiment, there is an identical connection arrangement for both ends of the tube to achieve a free installation method for the tube.

According to an embodiment, both ends of the tube have their own rectifier bridge, the AC side of which is connected to the contact pin pair of the corresponding end and the DC side is connected to the DC input of the current control unit.

According to an embodiment, at least some of the LED components are RGB LEDs.

According to an embodiment, the voltage level sensor circuit is arranged to detect automatically a DC control message supplied to a contact pin on the basis of a voltage level difference in the contact pin pair of at least one end of the tube.

According to an embodiment, the voltage level sensor circuit is arranged to detect automatically a PWM control message supplied to a contact pin on the basis of a voltage level difference in the contact pin pair of at least one end of the tube.

According to an embodiment, the voltage level sensor circuit is arranged to detect automatically a digital control message, e.g. serial digital message, supplied to a contact pin on the basis of a voltage level difference in the contact pin pair of at least one end of the tube.

An aspect of the invention is a lighting fixture arrangement which comprises a lighting fixture designed for a fluorescent tube and in which a LED tubular lamp according to one of the embodiments of the invention is installed.

### Brief description of the figures

The invention is now described in more detail in connection with preferred embodiments and with reference to the accompanying drawings, in which:
Figure 1A shows a simplified example of the mechanical structure of a fluorescent tube;
Figure 1 B shows an example of the electric circuitry of a fluorescent tube when the ballast is implemented with a ballast-starter combination;
Figure 1C shows an example of the electric circuitry of a fluorescent tube when an electronic ballast is used;
Figure 2 shows a simplified example of the structure of a fluorescent tube lighting fixture;
Figure 3 shows a simplified example of the mechanical structure of a LED tubular lamp; and
Figure 4 is a schematic representation of a LED tubular lamp according to an exemplary embodiment of the invention.

### Description of exemplary embodiments of the invention

The field of application of the invention encompasses all lamps, particularly tubular lamps which have one or more LEDs as a light source and with which a fluorescent tube lamp or the like can be replaced.

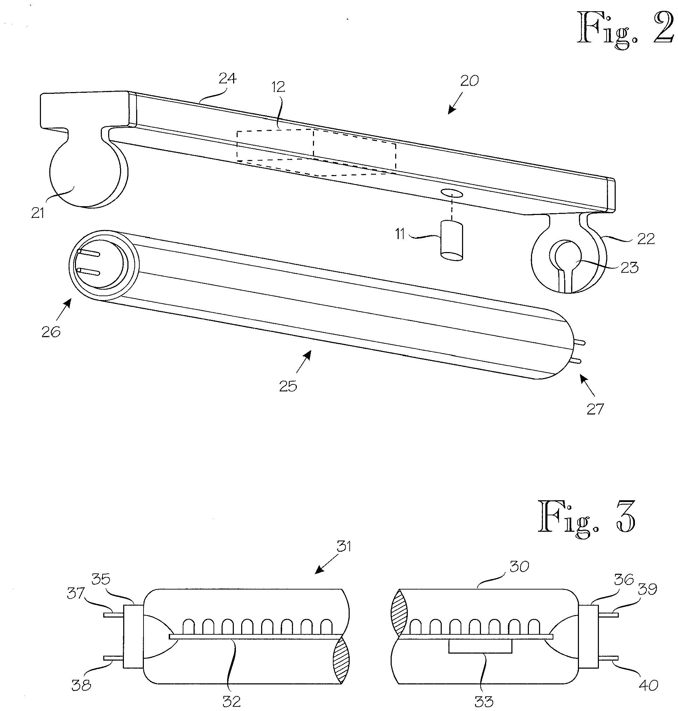

Figure 2 shows as an example a simplified conceptual drawing of a fluorescent tube lighting fixture 20 that comprises a body 24 containing the required electric structures, such as the ballast 12 and the starter 11, the latter being usually required only in connection with a ballast. At the ends of the lighting fixture, there are tube holders 21 and 22 with contact sockets 23 into which contact pins of the ends 26 and 27 of a tube 25 are inserted to achieve mechanical and electric connection.

Figure 3 illustrates a simplified example of a potential structure of a LED tubular lamp. The lamp 31 consists of a straight (or bent) tube 30 which is of an appropriate translucent material, such as glass or plastic, or possibly of a fluorescent material. The tube 30 does not have to be air-tight. Instead, it may have openings, holes and/or gaps for circulation of air and cooling. The tube 30 may also be made of a metal frame (e.g. a cooling plate), in which case the LED (Light Emitting Diode) components are open or covered with a transparent cover, diffuser, such as a transparent plastic cover or the like.

Inside the tube 30, there may be a printed board 32 or a corresponding structure, on which the LED (Light Emitting Diode) components and the electronic current supply components 33 they require are installed. The purpose of these components 33 is to convert the alternating voltage (e.g. 230 VAC) of the mains supply network to direct voltage and to regulate the direct current required by the LEDs.

Each end of the tube 34 is closed by a cap 35 or 36 having two symmetrically positioned contact pins 37 and 38 or 39 and 40. Power to the current supply components 33 on the circuit board 32 is supplied through these contact pins 37 and 38; 39 and 40. It should be noted that the internal structure and electric implementation of the LED tubular lamp are not significant to the invention but the dimmer solution according to the embodiments of the invention can be applied to implementations of various types. Examples of other LED tubular lamp solutions, to which the embodiments of the invention can be applied, include the LED tubular lamp solutions offering improved electrical safety and disclosed in Finnish patent applications No. 20105279, 20105447 and 20105448. The mechanical dimensions of the LED tubular lamp, at least its length and the number, locations and dimensions of contact pins, are preferably substantially the same as those of the fluorescent tube which is to be replaced, so that the fluorescent tube can be directly replaced by a LED tube in an existing fluorescent tube lighting fixture. The LED tubular lamp 31 may be matching in dimensions with a T8 tube, for instance, the diameter of which is approximately 26 mm and the length 60 cm or 120 cm.

As explained above, the LED tubular lamp 31 shown in Figure 3, for example, can be mounted in the lighting fixture 20 of Figure 2, for example, in either direction, or it may be rotated around its longitudinal axis so that the side-by-side connection pins at the end change places. The supply voltage or voltages can then also connect to the connection pins in different ways and with different polarities depending on the position of the tube. In addition, other possible voltages or signals, such as dimming control messages, may be received through different contact pins 37, 38, 39 and 40 depending on the position of the tube. This is why checking the correct operation of the LED tubular lamp is problematic, if the LED tubular lamp is to be fully interchangeable with a fluorescent tube both in structure and connections.

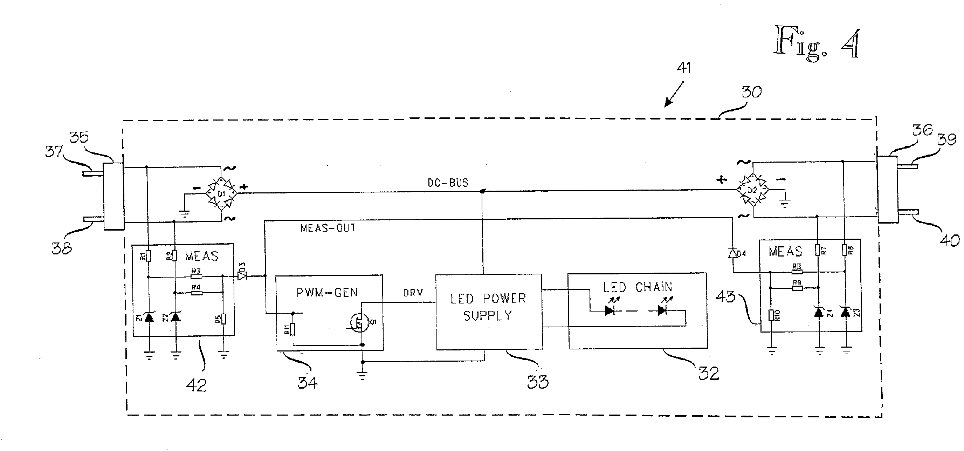

Figure 4 shows schematically a LED luminous tube 41 according to an exemplary embodiment of the invention, the tube being substantially interchangeable with a fluorescent tube both in structure and connections. The LED tubular lamp 41 may be similar in mechanical and electric structure to the tube 31 of Figure 3, for instance, with the exception that the LED tubular lamp 41 is also equipped with a circuit arrangement according to an embodiment of the invention, owing to which the LED tubular lamp works in all positions in which it may be mounted in the fluorescent tube lighting fixture. The components of the circuit arrangement may be positioned on the same printed board 32 or a corresponding structure as the LEDs and other current supply components 33. The connectors or connection pins 37, 38, 39 and 40 of the LED tube 41, with which the tube is connected to its holders 21 and 22 in the lighting fixture 20, are positioned in pairs (37/38 and 39/40) at both ends of the tube 41. The operating voltage can be supplied as in the case of a fluorescent tube either from the different ends of the tube 41 or from one end of the tube to one connection pin pair. In the example of Figure 4, a positive operating voltage (L, Line) is supplied to the LED tube at one end of the LED tube and a negative operating voltage (N, Neutral) at the other end. It should be noted that the operating voltage supplied to a LED tube according to the embodiments of the invention may be direct current voltage or alternating current voltage.

In the circuit arrangements according to the exemplary embodiments of the invention, there is an rectifier bridge D1 and D2 for each end of the LED tube 41. Diode bridges D1 and D2 make the LED tube independent of the operating current polarity (N, L) in such a manner that a positive (L) and negative (N) operating current (or alternating current) may be supplied to the LED tube via any single connection pin 37 to 40, in other words, all pins are equal for the voltage supply. This ensures that in mounting the LED tube 41, it is not necessary to attach attention to which way the tube 41 is mounted in its holders 35 and 36 or how the LED tube 41 is rotated in the holders. The LED tube 41 may be mounted in any way and the diodes of the rectifier bridges D1 and D2 automatically manage the correct polarity of the direct current circuit DC-BUS so that the tube obtains the correct operating voltage in all positions.

With reference to the example of Figure 4, the rectifier bridge D1 comprises four diodes connected to the bridge. The terminals (~) of the alternating voltage side (AC) of the rectifier bridge D1 are connected to the connection pins 37 and 38, the positive terminal (+) of the direct voltage side (DC) is connected to the positive direct voltage line DC-BUS and the negative terminal (-) is connected to the negative direct voltage line, such as ground. Correspondingly, the terminals (~) of the alternating voltage side (AC) of the rectifier bridge D2 are connected to the connection pins 39 and 40, the positive terminal (+) of the direct voltage side (DC) is connected to the positive direct voltage line DC-BUS and the negative terminal (-) is connected to the negative direct voltage line, such as ground. The direct voltage of the line DC-BUS provides the operating voltage of the LED power source 33. The LED tube 41 may be mounted in any positional direction and the diodes of the rectifier bridges D1 and D2 automatically provide the correct polarity of the direct current circuit DC-BUS so that the tube obtains the correct operating voltage in all positions. A positive supply voltage connected to any connection pin 37 to 40 connects to the DC-BUS line through a forward-biased diode between the corresponding terminal (~) of the rectifier bridge and the DC-BUS line. Correspondingly, a negative supply voltage connected to any connection pin 37 to 40 connects to ground through a forward-biased diode between the corresponding terminal (~) of the rectifier bridge and the DC-BUS line. When alternating voltage is supplied, rectification and the selection of positive and negative voltages take place by means of the diodes of the rectifier bridges (D1, D2), which corresponds to the situation when direct current voltage is supplied.

When a dimming option is used in a fluorescent tube light fixture, the positive supply voltage and dimming control voltage may typically be supplied to different connection pins of the same LED tube end. For instance, a positive operating voltage may be supplied to connection pin 37 and dimming control (or some other control) may be supplied to connection pin 38 or vice versa. Correspondingly, if the positive operating voltage is supplied at one end of the tube, it may be supplied to connection pin 39 and dimming control (or some other control, such as colour adjustment) may be supplied to connection pin 40 or vice versa. The fluorescent tube 41 should also work in all these different alternative cases.

According to exemplary embodiments of the invention, the LED tubular lamp 41 may comprise an in-built voltage level sensor circuit that is arranged to detect automatically a control message arriving at one of the connection pins of the tube 41 and to control the LED power source 33 to supply to the LEDs 32 the current level according to the control message regardless of which way or in which position the tube 41 is installed in the lighting fixture. In the presented exemplary embodiments, both ends of the tube 41 have their own voltage level sensor circuit MEAS 42 and 43, whereby the tube 41 may be mounted in place both ways, thus, achieving a mounting direction independent of the supply voltage polarity (N, L). As stated above, the positive operating voltage and control voltage are generally supplied to the same end of the tube in different connection pins of the connection pin pair. With the voltage level sensor circuit 42 or 43, it is possible to generate a control signal MEAS-OUT proportional to the voltage difference between the positive supply voltage and control voltage to control the current supply to the LEDs 32.

Let us assume, for instance, that the positive operating voltage and control voltage are supplied to the left-side end of the tube 41 in the example of Figure 4. The voltage level sensor circuit 42 then measures the voltage difference between the connection pins 37 and 38 of this positive end and generates a control signal as follows, for example:

| **U₃₇** | **U₃₈** | **Umeas** |
|---|---|---|
| Uₙᵢₘ | 0V | min |
| 0V | Uₙᵢₘ | min |
| Unim | Unim | max |

Thus, when both connection pins of the positive end obtain a nominal voltage (Unim), the control signal of the sensor circuit 42 controls the LEDs 32 to their full brightness (Umeas=max). When the voltage of one connection pin is Uₙᵢₘ and that of the other 0V, the LEDs 32 are controlled to minimum brightness (Umeas=min).

It should be noted that the embodiments of the invention are not intended to be limited to the above linear DC voltage control message type that is received in one or more connection pins of the tube. The detection according to the principles of the invention may be used to detect any type of control message, whereby the message may be modulated or encoded into the voltage as a pulse width modulated (PWM) message or digital message or digital serial message, for example. The specific implementation of the sensor circuit may naturally vary depending on the type of the control message.

In the exemplary embodiment of Figure 4, the sensor circuit 42 comprises a bridge formed by resistors R1 to R4 for detecting the connection pin in which the control voltage is received and what the relative level of the control voltage is. Resistors R1 and R3 are connected in series between connection pin 37 and the cathode of diode D3. Resistors R2 and R4 are connected in series between connection pin 38 and the cathode of diode D3. The anode of diode D3 is connected to the control signal line MEAS-OUT. Resistor R5 is connected to the cathode of diode D3 and ground. The resistor bridge forms of the positive operating voltage that is supplied to one of the connection pins of the connection pin pair, a reference voltage with which the level of the control voltage is compared. The reference voltage may be delimited to be smaller than the positive operating voltage by using zener diodes Z1 and Z2, for instance. Zener diode Z1 is connected to ground through a circuit node between resistors R1 and R3. Zener diode Z2 is connected to ground through a circuit node between resistors R2 and R4. Sensor circuit 43 is identical to sensor node 42 and comprises resistors R6 to R10, zener diodes Z3 and Z4 and diode D4. Sensor circuit 43 measures the voltage difference between connection pins 39 and 49 and generates a control signal in the same way as described above in connection with sensor node 42. The control signal is connected to the control signal line MEAS-OUT through diode D4. Diodes D3 and D4 isolate sensor circuits 42 and 43 from each other, even though they are connected to the same control line. Diodes D3 and D4 may act as selectors of the most positive voltage, thus, to achieve that the control complies with the sensor circuit 42 or 43 in which the voltage difference between the connection pin pair 37/38 or 39/40 is the biggest or alternatively smallest. Thus, it is possible to select freely the connection pin pair 37/38 or 39/40 to which the control voltage is supplied. In an exemplary embodiment, two fixed control voltages of different levels may be brought to the connection pin pairs 37/38 and 39/40 and used to define fixed light dimming levels.

Even though the exemplary embodiments described in connection with Figure 4 present circuit arrangements using positive voltage for control, it is to be appreciated that by connecting diodes D3 and D4 and zener diodes Z1 to Z4 in reverse (vice versa in polarity), it is possible to use the same connection to detect negative voltage. The voltage polarities presented above are then vice versa.

In exemplary embodiments, the control signal MEAS-OUT formed by sensor circuits 42 and 43, which may for instance be the difference between the positive supply voltage and control voltage received by the tube 41, controls a pulse width modulator 34. The pulse width modulator 34 forms a pulse width modulated (PWM) control voltage DRV corresponding to the MEAS-OUT control signal to controls the LED power source or current supply circuit 33. The LED power source 33 adapts the direct current voltage and current of the DC-BUS line to a supply voltage and current suitable for the LED chain 32 according to PWM control. This way, the supply current of the LED chain is PWM-shaped and responsive to the magnitude of the control voltage received at the connection pins 37-38 or 39-40 of the LED tube 41. PWM adjustment is done in such a manner that at a small pulse ratio (pulse width), the mean supply current of the LED chain 32 is smaller and, therefore, the brightness of the LEDs is low. Correspondingly, at a high pulse ratio, the brightness of the LEDs is high. Instead of PWM adjustment, it is possible to use some other adjustment that adjusts the current passing through the LED chain according to the MEAS-OUT control signal. The LED power source 33 may be any suitable power source. The LED power source 33 may for instance be any a step-up or step-down power source with a current output depending on the supply voltage and/or length of the LED chain 32.

Conventional one-colour LEDs and/or RGB LEDs may be used as the LEDs in the LED chain 32. Currently, RGB LEDs are available that consist of red (R), green (G) and blue (B) LED chips in the same LED component. Alternatively RGB elements may be assembled of separate R (red), G (green) and B (blue) LEDs. By using the RGB mix known from colour televisions, it is possible to alter colour ratios and obtain the required tone of colour. This way, it is also possible to produce white light. The control circuit and loop arrangement of embodiments of the present invention can be used to control the brightness and/or tone of colour of the RGB LEDs in an RGB LED tube by using a control message supplied to the connection pins. The colour adjustment of an RGB LED may require control information for each colour R (red), G (green) and B (blue) separately, for example a brightness level for the LEDs or LED chips of each colour. This information may easily be transmitted in a digital control message, for example serial message, through the two connection pins at one end of the LED tube. Alternatively, the information may be transmitted in a PWM control message through the two connection pins at one end of the LED tube in such a manner, for instance, that the PMW control message is supplied to one colour (e.g. R) through one connection pin, to a second colour (e.g. B) through another connection pin, and to a third colour (e.g. G) through the phase shift of these PWM messages. Correspondingly, it is possible to use two or more connection pins at both ends to supply the three sets of control information.

It is obvious to a person skilled in the art that as technology advances, the basic idea of the invention may be implemented in many different ways. The invention and its embodiments are thus not restricted to the examples described above, but may vary within the scope and spirit of the claims.

## Claims

1. A LED tubular lamp (31, 41) comprising a translucent or fluorescent tube (30) of substantially the shape and size of a fluorescence tube, inside which one or more LED components (32) and a current control unit (33, 34) are installed and at each end of which there is a contact pin pair (37, 38, 39, 40) for connecting the LED tubular lamp mechanically and electrically to the tube supports (21, 22) of the fluorescent tube lighting fixture (20), **characterised in that** the LED tubular lamp (31, 41) comprises a voltage level sensor circuit (42, 43) that is arranged to detect automatically a voltage difference in the connection pin pair (37, 38, 39, 40) at least at one end of the tube (30) and to determine from the voltage difference control information for brightness and/or colour for the current control unit (33, 34) of the LED components.

2. A LED tubular lamp as claimed in claim 1, **characterised in that** the voltage level sensor circuit (42, 43) is arranged to detect automatically a voltage difference in the contact pin pairs at both ends of the tube and to determine control information for the current control unit (33, 34) on the basis of the higher one of the detected voltage differences.

3. A LED tubular lamp as claimed in claim 1, **characterised in that** the voltage level sensor circuit (42, 43) is arranged to detect automatically a voltage difference in the contact pin pairs at both ends of the tube and to determine control information for the current control unit (33, 34) on the basis of the detected voltage differences.

4. A LED tubular lamp as claimed in any preceding claim 1 to 3, **characterised in that** both ends of the tube have their own voltage level sensor circuit (42, 43).

5. A LED tubular lamp as claimed in any preceding claim 1 to 4, **characterised in that** both ends of the tube have their own voltage level sensor circuit (42, 43) and that the output of each of the voltage level sensor circuits (42, 43) is connected through a corresponding isolation diode to the common control input in the voltage control unit (33, 34).

6. A LED tubular lamp as claimed in any preceding claim 1 to 5, **characterised in that** the supply voltage and control voltage are received at different contact pins of the contact pin pair of the same tube end and that the voltage level sensor circuit (42, 43) generates from the supply voltage a reference voltage, with which the control voltage is compared.

7. A LED tubular lamp as claimed in any preceding claim 1 to 6, **characterised in that** the current control unit (33, 34) is responsive to said control information for adjusting a current supplied to the LED components (32).

8. A LED tubular lamp as claimed in any preceding claim 1 to 7, **characterised in that** the current control unit (33, 34) is arranged to pulse width modulate a current supplied to the LED components (32) on the basis of the control information.

9. A LED tubular lamp as claimed in any preceding claim 1 to 8, **characterised in that** both ends of the tube have an identical connection arrangement to achieve a free mounting of the tube.

10. A LED tubular lamp as claimed in any preceding claim 1 to 9, **characterised in that** both ends of the tube have their own rectifier bridge (D1, D2) having an AC side connected to the contact pin pair of the corresponding end and a DC side connected to a DC input (DC-BUS) of the current control unit (33, 34).

11. A LED tubular lamp as claimed in any preceding claim 1 to 10, **characterised in that** at least some of the LED components are RGB LEDs.

12. A LED tubular lamp as claimed in any preceding claim 1 to 11, **characterised in that** the voltage level sensor circuit (42, 43) is arranged to detect automatically a DC control message supplied to a contact pin on the basis of a voltage level difference in the contact pin pair at least at one end of the tube.

13. A LED tubular lamp as claimed in any preceding claim 1 to 11, **characterised in that** the voltage level sensor circuit (42, 43) is arranged to detect automatically a PWM control message supplied to a contact pin on the basis of a voltage level difference in the contact pin pair at least at one end of the tube.

14. A LED tubular lamp as claimed in any preceding claim 1 to 11, **characterised in that** the voltage level sensor circuit (42, 43) is arranged to detect automatically a digital control message supplied to a contact pin on the basis of a voltage level difference in the contact pin pair at least at one end of the tube.

15. A lighting fixture arrangement comprising a lighting fixture (20) intended for a fluorescent tube, **characterised in that** a LED tubular lamp (31, 41) as claimed in any one of claims 1 to 14 is installed in the lighting fixture.
